# EUROPÄISCHE PATENTSCHRIFT

(11) **EP 0 570 042 B1**
(45) Veröffentlichungstag und Bekanntmachung des Hinweises auf die Patenterteilung: **21.01.1998**
(21) Anmeldenummer: 93201173.7
(22) Anmeldetag: 22.04.1993
(51) Int. Cl.: B23D 45/06, B23Q 1/25

(54) **Kreissäge mit neigbarem Sägeblatt**
Circular saw with angularly adjustable saw blade
Scie circulaire à lame de scie inclinable

(30) Priorität: 09.05.1992 DE 4214760
(43) Veröffentlichungstag der Anmeldung: 18.11.1993
(73) Patentinhaber: SCHMIDLER MASCHINENBAU GmbH, D-91180 Heideck (DE)
(72) Erfinder: Schmidler, Richard, W-8548 Heideck (DE); Schmidler, Hans, W-8548 Heideck (DE)

(56) Entgegenhaltungen:
- DE-C- 3 818 468
- FR-A- 1 363 254
- US-A- 2 678 071

## Beschreibung

Die Erfindung betrifft eine Kreissäge gemäß dem Oberbegriff des Anspruches 1.

Eine solche Säge ist als kombinierte Schwenk- und Kapp- Untertischkreissäge "HolzbauBlitz 850" der Anmelderin am Markt bekannt. Diese Säge ist in ihrem DE-C-38 18 468 hinsichtlich verschiedener Funktionsaspekte näher beschrieben. Sie findet Einsatz ibs. als in Abbundanlagen integrierte Bearbeitungsstation, aber auch als separat betriebene Holzbearbeitungsmaschine, mit um die Hochachse (quer zur Achse des Sägeblattes und relativ zur Vorschubrichtung des Werkstückes) verdrehbarem Zentrum des Auflagetisches samt hindurchragenden Kreissägeblattes. Zusätzlich zu dieser Verdrehmöglichkeit relativ zur Vorschubrichtung des Werkstückes ist das Sägeblatt auch definiert gegenüber dem Tisch neigbar, ohne daß sich dabei die Sehne verlagert, längs der das Sägeblatt mit seinem Arbeitsabschnitt durch das verdrehbare Zentrum des Tisches hindurchtritt. Das ist dort dadurch gewährleistet, daß eine tragende Konstruktion für die Lagerung des Sägeblatt (das gewöhnlich in einem unter dem Auflagetisch gehalterten Schutzkasten rotiert) mittels Rollen auf einer kreisbogenförmigen Bahn abgestützt ist. Obgleich diese Bahn gegen Verunreinigung durch ein Gehäuse abgeschirmt ist, ist doch in der Praxis nicht zu vermeiden, daß Sägemehl oder andere Fremdkörper sich auf der Bahn ablagern. Das kann dann zu unebenem Lauf der das Sägeblatt tragenden, auf dieser Bahn abgestützten Rollen beim Neigen des Sägeblattes und dadurch zu nicht mehr stetiger, zu von der Vorgabe abweichender oder gar zu nicht reproduzierbarer Neigungseinstellung gegenüber dem Tisch führen. Solche Störungen treten sogar verstärkt auf, wenn z.B. aus Bequemlichkeit die Abschirmung nach einer Reinigung der Rollenbahn nicht wieder korrekt angebracht wurde.

Deshalb liegt der Erfindung die Aufgabe zugrunde, eine Kreissäge gattungsgemäßer Art dahingehend weiterzubilden, daß hinsichtlich der Einstellung des Sägeblatt-Neigungswinkels verschmutzungsbedingte Störungen und Reinigungserfordernisse weitestgehend ausgeschlossen sind.

Diese Aufgabe ist erfindungsgemäß im wesentlichen dadurch gelöst, daß die gattungsgemäße Säge für die Neigung ihres Sägeblattes mit den Merkmalen nach dem Kennzeichnungsteil des Hauptanspruches ausgestattet ist; wobei hinsichtlich der Erfindung ausdrücklich auch auf die Charakterisierung in der Zusammenfassung gemäß Beiblatt und auf die Weiterbildungen gemäß den Unteransprüchen sowie gemäß nachfolgender Zeichnungsbeschreibung Bezug genommen wird.

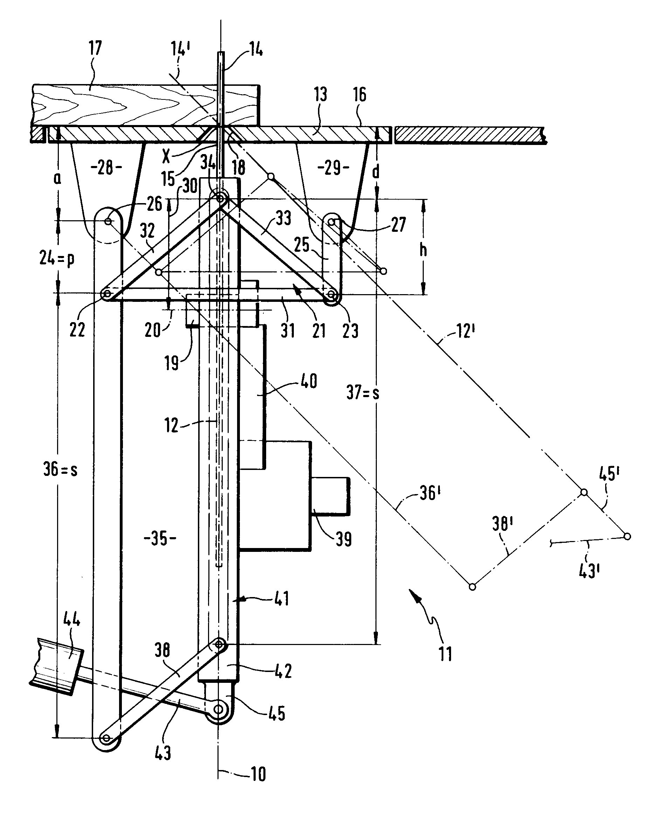

Jedenfalls ruht das relativ zum Tisch neigbare Sägeblatt nun nicht mehr auf einer verschmutzungsgefährdeten Rollenbahn, sondern es ist erfindungsgemäß unter dem Tisch gelenkig mittels Pendelstangen an einem Dreieckslenker aufgehängt, der zugleich Teil einer Parallelogrammführung ist, welche mit einer der Pendelstangen starr verbunden ist und mit dem Dreieckslenker einen Schenkel als Querstange gemeinsam aufweist. Die Gelenkpunkte (unten zur Vereinfachung der Bezugnahme auf die Zeichnung im Dreieckslenker auch als Winkel bezeichnet) können als geschlossene Wälzlager realisiert sein und bilden somit richtungsstabile Schwenk-Führungen, die gegen Verschmutzungen sicher gekapselt sind.

Die Erfindung wird nachstehend anhand der Zeichnung näher erläutert. Deren einzige Figur zeigt stark vereinfacht aber annähernd maßstabsgerecht in Seitenansicht den verdrehbaren Auflagetisch einer Kreissäge mit neigbarem Sägeblatt in seiner Grundstellung (rechtwinklig zur Auflagefläche für das Werkstück); und außerdem gestrichelt angedeutet (mit apostrophierten Bezugsziffern) eine um die Bearbeitungs-Position geneigte gegenseitige Anordnung von Sägeblatt und Auflagetisch.

Die in Seitenansicht gegen die Blattschneide skizzierte Kreissäge 11 ist mit einem Auflagetisch 13 ausgestattet, der - unter Mitnahme des kreisförmigen Sägeblatt 12 - um die Hochachse 10 durch den Mittelpunkt des Sägeblatt 12 verdrehbar ist. Zusätzlich ist das Sägeblatt 12 relativ zum Auflagetisch 13 derart neigbar, daß dabei die Sehne 15, die den Arbeitsabschnitt 14 des Sägeblatt 12 in der Ebene der Auflagefläche 16 begrenzt, stets in der selben Durchtritts-Position x verbleibt, die am oberen Rand eines nach unten v-förmig sich aufweitenden Schlitz 18 im Auflagetisch 13 liegt. Ein Balken oder dergleichen Werkstück 17, der auf dem Auflagetisch 13 quer zum Sägeblatt 12 verschoben wird, kann deshalb z.B. wie skizziert zunächst mit einem Kapp-Schnitt senkrecht zu seiner Längsachse abgelängt und daraufhin ohne Umspannerfordernisse bei erneutem Arbeitsvorschub an genau der selben Bearbeitungs-Position x vom dann geneigten Sägeblatt 12 stirnseitig abgeschrägt werden.

Um sicherzustellen, daß die Bearbeitungs-Position x sich beim Neigen des Auflagetisch 13 relativ zum Sägeblatt 12 nicht in Richtung des Durchmessers des Sägeblatt 12' oder quer dazu verlagert, ist dieses, mittels der Lagerung 19 seiner nur als Achse skizzierten Antriebswelle 20, in der oben schon zitierten Weise unter dem Auflagetisch 13 gelenkig aufgehängt.

Dieser Aufhängung des Sägeblatt 12 unter dem Auflagetisch 13 dient ein gleichschenkliger Dreieckslenker 21, der an seinen Basiswinkeln 22,23 gelenkig mit den Enden von Pendelstangen 24,25 verbunden ist, die gegenüberliegend gelenkig in Augen 26,27 aufgehängt sind, welche ihrerseits an starr unter dem Auflagetisch 13 angeordneten Rippen 28,29 ausgebildet sind. Der Dreieckslenker 21 seinerseits hängt mit seinem oberhalb der Basis 31 gelegenen, von den Schenkeln 32,33 bestimmten Scheitelwinkel 34 gelenkig auf einem mit der Lagerung 19 des Sägeblatt 12 starr verbundenen Ständer 30.

Der jeweilige Abstand a der Augen 26,27 von der Ebene der Tisch-Auflagefläche 16 ist gleich der Höhe h des Dreieckslenker 21; so daß (in der Ruhelage für senkrechten Durchtritt des Sägeblatt 12 durch den Auflagetisch 13) die Distanz d des Scheitelwinkel 34 zur Auflagefläche 16 gleich der Länge p der Pendelstangen 24,25 ist, die somit ihrerseits zusammen mit der Ebene Augen 26,27 unter dem Auflagetisch 13 als Parallelführung für die Dreiecks-Basis 31 wirken.

Das Sägeblatt 12 hängt also mittels seines Ständer 30 gelenkig im Scheitelwinkel 34 des gleichschenkligen Dreieckslenker 21, der seinerseits mit seinen Basiswinkeln 22,23 über Pendelstangen 24,25 gelenkig an tischfesten Augen 26,27 aufgehängt ist. Diese Aufhängung ist durch eine weitere Parallelogrammführung 35 ergänzt. Für die ist eine der Pendelstangen 24,25 in Längsrichtung über den betreffenden der Basiswinkel 22,23 hinaus starr verlängert, nämlich um eine parallel zur Hochachse 10 (also zum Durchmesser des Sägeblatt 12) sich erstreckende Längsstange 36 der Stangenlänge s. Parallel dazu ist der Ständer 30 selbst, über die Dreiecks-Basis 31 hinaus (mit der er nicht verbunden ist), zu einer Parallelstange 37 der gleichen Stangenlänge s verlängert. An den vom Dreieckslenker 21 abgelegenen Enden sind die Längsstange 36 und die Parallelstange 37 durch eine Querstange 38 miteinander gelenkig verbunden. Die Parallelogrammführung 35 ist dadurch parallel zu demjenigen der Dreiecks-Schenkel 32,33 vervollständigt, dessen Basiswinkel 22,23 im Ubergang von einer der Pendelstangen 24,25 zur Längsstange 36 angelenkt ist.

Zur Vermeidung von Verkantungen beim Neigen des Sägeblatt 12' um die Position x ist die dargestellte gelenkige Aufhängung (also die Kombination von Dreieckslenker 21 und Parallelogrammführung 35 in Abstand a unter der Auflagefläche 16) zweckmäßigerweise zweimal realisiert, also parallel zu einander in Richtung des Schlitz 18 (d.h. quer zur Zeichenebene) versetzt an beiden Seiten des Sägeblatt 12. Alle beschriebenen Gelenkstellen weisen Achsen auf, die parallel zur Auflagefläche 16 und parallel zum Sägeblatt 12 orientiert sind. Gegen Verunreinigungen etwa durch Sägemehl sind alle diese Gelenke als wartungsfrei geschlossene Wälzlager handelsüblicher Art ausgebildet.

Wie dargestellt kann direkt an die Parallelogrammführung 35, etwa an den verlängerten Ständer 30 für die Aufhängung des Sägeblatt 12, ein Antriebsmotor 39 für die Antriebswelle 20 des Sägeblatt 12 angeflanscht sein, erforderlichenfalls mit Getriebe 40. Falls das Sägeblatt 12 in einem flachen Schutzkasten 41 rotiert, aus dem es oben, unterhalb des Schlitz 18, zum Durchtritt durch die Auflagefläche 16 austritt, kann jeweils dessen senkrecht zum Auflagetisch 13 orientierte schmale Gehäusewand 42 zumindest teilweise als Ständer 30 bzw. als Parallelstange 37 dienen, weshalb letztere in der Zeichnung nur gestrichelt dargestellt sind.

Zum Neigen des Sägeblatt 12 kann direkt oder indirekt ein Kraftelement, z.B. die Kolbenstange 43 eines relativ zum Auflagetisch 13 gelenkig abgestützten Fluidkraft-Zylinder 44, an die Parallelogrammführung 35 angelenkt sein, beispielsweise wie dargestellt an einen Vorsprung 45 der Parallelstange 37 bzw. der Gehäusewand 42 dem Dreieckslenker 21 gegenüber. Wenn die Kolbenstange 43 aus der in der Zeichnung ausgezogen gezeigten Normalstellung ausgefahren wird, bewirkt die Parallelführung der Pendelstangen 24,25 ein seitliches Verschieben und Anheben des Dreieckslenker 21 unter Beibehaltung der parallelen Orientierung der Dreiecks-Basis 31 zur Auflagefläche 16. Zugleich bewirkt die Auslenkung der Parallelogrammführung 35 ein Verschwenken der Parallelstange 37 um den Scheitelwinkel 34 des Dreieckslenker 21, womit der Kreuzungspunkt von Basis 31 und Parallelstange 37 sich in Richtung auf denjenigen der Basiswinkel 22,23 verlagert, zu dem hin die Verschwenkbewegung erfolgt, während aber die Hochachse 10 weiterhin die Position x kreuzt. Das bedeutet, daß die Sehne 15 des Durchtritts des Sägeblatt 12 durch die Auflagefläche 16 sich nicht verlagert, sondern dessen Arbeitsabschnitt 14 genau um die durch diese Position x verlaufende Sehne 15 geneigt wird - wie es sein soll, wenn z.B. das Stirnende des Werkstück 17 ohne Umspannerfordernisse unter verschiedenen Kapp-Winkeln zu bearbeiten ist.

## Patentansprüche

1. Kreissäge (11) mit relativ zur Auflagefläche (16) ihres Auflagetisches (13) neigbarem Sägeblatt (12), dessen Lagerung (19) unterhalb der Auflagefläche (16) aufgehängt ist,
dadurch gekennzeichnet,
daß die Lagerung (19) mittels eines starr daran befestigten Ständers (30) gelenkig im Scheitelwinkel (34) eines gleichschenkligen Dreieckslenkers (21) aufgehängt ist,
der seinerseits zum Aufspannen eines ersten Parallelogrammes an seinen Basiswinkeln (22, 23) über Pendelstangen (24, 25) gelenkig in tischfesten Augen (26, 27) unter der Auflagefläche (16) aufgehängt ist und einen seiner Schenkel (32, 33) mit einer zweiten Parallelogrammführung (35) gemeinsam hat,
von der eine Längsstange (36) als starre Verlängerung einer der Pendelstangen (24, 25) um die Stangenlänge (s) ausgebildet ist,
während der Ständer (30) die selbe Stangenlänge (s) als Parallelstange (37) aufweist,
wobei die Höhe des Dreieckslenkers (21) gleich dem Abstand (a) der Augen (26, 27) unter der Auflagefläche (16) und, bei rechtwinkligem Durchtritt des Sägeblattes (12) durch die Auflagefläche (16), die Distanz (d) vom Scheitelwinkel (34) zur Auflagefläche (16) gleich der Länge (p) der Pendelstangen (24, 25) gewählt ist,
die somit ihrerseits zusammen mit der Ebene durch die Augen (26, 27) als Parallelogrammführung Für die Dreiecks-Basis (31) wirken.

2. Kreissäge nach Anspruch 1
dadurch gekennzeichnet, daß der Auflagetisch (13) um die Durchtritts-Position (x) der parallel zur Parallelstange (37) durch den Mittelpunkt des Sägeblatt (12) verlaufenden Hochachse (10) verdrehbar ist.

3. Kreissäge nach einem der vorangehenden Ansprüche,
dadurch gekennzeichnet, daß an der Parallelogrammführung (35) ein Kraftelement für das Verkippen des Sägeblatt (12) angreift.

4. Kreissäge nach einem der vorangehenden Ansprüche,
dadurch gekennzeichnet, daß die Augen (26,27) an Rippen (28,29) unter dem Auflagetisch (13) ausgebildet sind.

5. Kreissäge nach einem der vorangehenden Ansprüche,
dadurch gekennzeichnet, daß die Parallelstange (37) der Parallelogrammführung (35) zugleich Träger von der Lagerung (19) des Sägeblatt (12) und von dessem Antriebsmotor (39) ist.

6. Kreissäge nach einem der vorangehenden Ansprüche,
dadurch gekennzeichnet, daß die den Ständer (30) beinhaltende Parallelstange (37) Teil der schmalen Gehäusewand (42) eines das Sägeblatt (12) unterhalb des Auflagetisch (13) umgebenden Schutzkasten (41) ist.

7. Kreissäge nach einem der vorangehenden Ansprüche,
dadurch gekennzeichnet, daß die Gelenke der Pendelstangen (24,25) und der Parallelogrammführung (35) als geschlossene Wälzlager ausgebildet sind, deren Achsen parallel zum Sägeblatt (12) und zum Auflagetisch (13) orientiert sind.

8. Kreissäge nach einem der vorangehenden Ansprüche,
dadurch gekennzeichnet, daß zwei in Richtung der Sehne (15) des die Auflagefläche (16) durchragenden Sägeblatt (12) gegeneinander versetzte aber zueinander parallele Parallelogrammführungen (35) mit Dreieckslenkern (21) an Pendelstangen (24,25) unter dem Auflagetisch (13) aufgehängt sind.

## Claims

1. A circular saw (11) with a saw blade (12) which is inclinable relative to the support surface (16) of its support table (13), the mounting means (19) thereof being suspended beneath the support surface (16), characterised in that
by means of a pillar member (30) rigidly fixed thereto the mounting means (19) is suspended pivotably at the apex angle (34) of an isosceles triangular link arrangement (21) which in turn for mounting a first parallelogram is pivotably suspended at its base angles (22, 23) by way of swing bars (24, 25) in eyes (26, 27) which are fixed with respect to the table, beneath the support surface (16), and has one of its legs (32, 33) in common with a second parallelogram guide means (35), of which a longitudinal bar (36) is in the form of a rigid prolongation of one of the swing bars (24, 25) by the bar length (s) while the pillar member (30) is of the same bar length (s) as the parallel bar (37), wherein the height of the triangular link arrangement (21) is equal to the spacing (a) of the eyes (26, 27) beneath the support surface (16) and, when the saw blade (12) passes at a right angle through the support surface (16), the distance (d) from the apex angle (34) to the support surface (16) is equal to the length (p) of the swing bars (24, 25) which thus in turn act together with the plane through the eyes (26, 27) as a parallelogram guide means for the triangle base (31).

2. A circular saw according to claim 1 characterised in that the support table (13) is rotatable about the position (x) of the passage therethrough of the vertical axis (10) extending parallel to the parallel bar (37) through the centre point of the saw blade (12).

3. A circular saw according to one of the preceding claims characterised in that a power element for tilting the saw blade (12) engages the parallelogram guide means (35).

4. A circular saw according to one of the preceding claims characterised in that the eyes (26, 27) are provided on ribs (28, 29) beneath the support table (13).

5. A circular saw according to one of the preceding claims characterised in that the parallel bar (37) of the parallelogram guide means (35) is at the same time the carrier of the mounting means (19) of the saw blade (12) and the drive motor (39) thereof.

6. A circular saw according to one of the preceding claims characterised in that the parallel bar (37) including the pillar member (30) is part of the narrow housing wall (42) of a protective casing (41) which surrounds the saw blade (12) beneath the support table (13).

7. A circular saw according to one of the preceding claims characterised in that the pivots of the swing bars (24, 25) and the parallelogram guide means (35) are in the form of closed rolling bearings whose axes are oriented parallel to the saw blade (12) and to the support table (13).

8. A circular saw according to one of the preceding claims characterised in that two parallelogram guide means (35) which are parallel to each other or displaced relative to each other in the direction of the chord (15) of the saw blade (12) which projects through the support surface (16) are suspended with triangular link arrangements (21) on swing bars (24, 25) beneath the support table (13).

## Revendications

1. Scie circulaire (11) avec une lame de scie (12) inclinable par rapport à la surface de pose (16) de sa table de pose (13), dont le montage de tourillonnement (19) est suspendu au-dessus de la surface de pose (16), caractérisée en ce que,
le montage de tourillonnement (19) est suspendu de manière articulée au moyen d'un support (30) y étant fixé rigidement, à l'angle de sommet (34) d'un levier triangulaire (21) à branches identiques,
qui, de son côté, est suspendu, en vue d'effectuer le déploiement d'un premier parallélogramme, à ses angles de base (22, 23), par l'intermédiaire de barres pendulaires (24, 25), de manière articulée dans des oeillets (26, 27), fixes par rapport à la table et situés sous la surface de pose (16), et l'une de ses branches (32, 33) étant commune à un deuxième guidage par parallélogramme (35),
dont une barre longitudinale (36) est réalisée sous forme de prolongement rigide d'une des barres pendulaires (24, 25), ce prolongement étant de la valeur de la longueur de barre (s),
tandis que le support (30) présente la même longueur de barre (s) que la barre parallèle (37),
la hauteur du levier triangulaire (21) étant égal à l'espacement (a) entre les oeillets (26, 27) se trouvant sous la surface de pose (16) lors du passage à angle droit de la lame de scie (12) à travers la surface de pose (16), la distance (d) entre l'angle de sommet (34) et la surface de pose (16) étant choisi égal à la longueur (p) des barres pendulaires (24, 25),
qui agissent ainsi de leurs côtés, conjointement avec le plan passant par les oeillets (26, 27), comme guidage parallèle pour la base de triangle (31).

2. Scie circulaire selon la revendication 1, caractérisée en ce que la table de pose (13) est susceptible de tourner autour de la position de passage (x) de l'axe vertical (10) passant parallèlement à la barre parallèle (37), par le point central de la lame de scie (12).

3. Scie circulaire selon l'une des revendications précédentes, caractérisée en ce qu'un élément d'application de force, destiné à faire basculer la lame de scie (12), agit sur le guidage à parallélogramme (35).

4. Scie circulaire selon l'une des revendications précédentes, caractérisée en ce que les oeillets (26, 27) sont réalisés sur des nervures (28, 29) prévues sous la table de pose (13).

5. Scie circulaire selon l'une des revendications précédentes, caractérisée en ce que la barre parallèle (37) de guidage à parallélogramme (35) est en même temps le support du montage de tourillonnement (19) de la lame de scie (12) et de son moteur d'entraînement (39).

6. Scie circulaire selon l'une des revendications précédentes, caractérisée en ce que la barre parallèle (37) contenant le support (30) fait partie de la paroi étroite (42) de carter d'un caisson de protection (41) entourant la lame de scie (12) au-dessous de la table de pose (13).

7. Scie circulaire selon l'une des revendications précédentes, caractérisée en ce que les articulations des barres pendulaires (24, 25) et du guidage à parallélogramme (35) sont réalisées sous forme de paliers de roulement fermés, dont les axes sont orientés parallèlement à la lame de scie (12) et à la table de pose (13);

8. Scie circulaire selon l'une des revendications précédentes, caractérisée en ce que deux guidages à parallélogrammes, décalés l'un par rapport à l'autre dans la direction de la corde (15) de la lame de scie (12) traversant la surface de pose (16) mais parallèles l'un à l'autre, sont suspendus, à l'aide leviers triangulaires (21), sur des barres pendulaires (24, 25), sous la table de pose (13).
